# EUROPEAN PATENT SPECIFICATION

(11) **EP 2 103 091 B1**
(45) Date of publication and mention of the grant of the patent: **18.11.2015**
(21) Application number: 06819944.7
(22) Date of filing: 12.12.2006
(51) Int. Cl.: H04L 12/28, H04L 29/12

(54) **IP ADDRESS DISTRIBUTION IN MIDDLEBOXES**
IP-ADRESSENVERTEILUNG IN MIDDLEBOXES
DISTRIBUTION D'ADRESSE IP DANS DES BOITIERS INTERMEDIAIRES

(43) Date of publication of application: 23.09.2009
(73) Proprietor: Telefonaktiebolaget L M Ericsson (publ), 164 83 Stockholm (SE)
(72) Inventor: HAUTAKORPI, Jani, 00350 Helsinki (FI); CAMARILLO, Gonzalo, 00150 Helsinki (FI)
(74) Representative: Talbot-Ponsonby, Daniel Frederick
(86) International application number: PCT/EP2006/069579
(87) International publication number: WO 2008/071227

(56) References cited:
- WO-A-98/26549
- US-A1- 2002 073 182
- WEI WU ET AL: "Network assisted IP mobility support in wireless LANs" NETWORK COMPUTING AND APPLICATIONS, 2003. NCA 2003. SECOND IEEE INTERNATIONAL SYMPOSIUM ON 16-18 APRIL 2003, PISCATAWAY, NJ, USA,IEEE, 16 April 2003 (2003-04-16), pages 257-264, XP010640259 ISBN: 0-7695-1938-5
- ELIOT LEAR CISCO SYSTEMS: "A Middle Box Architectural Framework" IETF STANDARD-WORKING-DRAFT, INTERNET ENGINEERING TASK FORCE, IETF, CH, 3 January 2001 (2001-01-03), XP015031433 ISSN: 0000-0004

## Description

### Field of the Invention

The present invention relates to the operation of a middlebox in an Internet Protocol (IP) network. In particular, the invention relates to a middlebox providing an interface between IP networks where an entity within one network is responsible for allocating IP addresses to entities within the other network.

### Background to the Invention

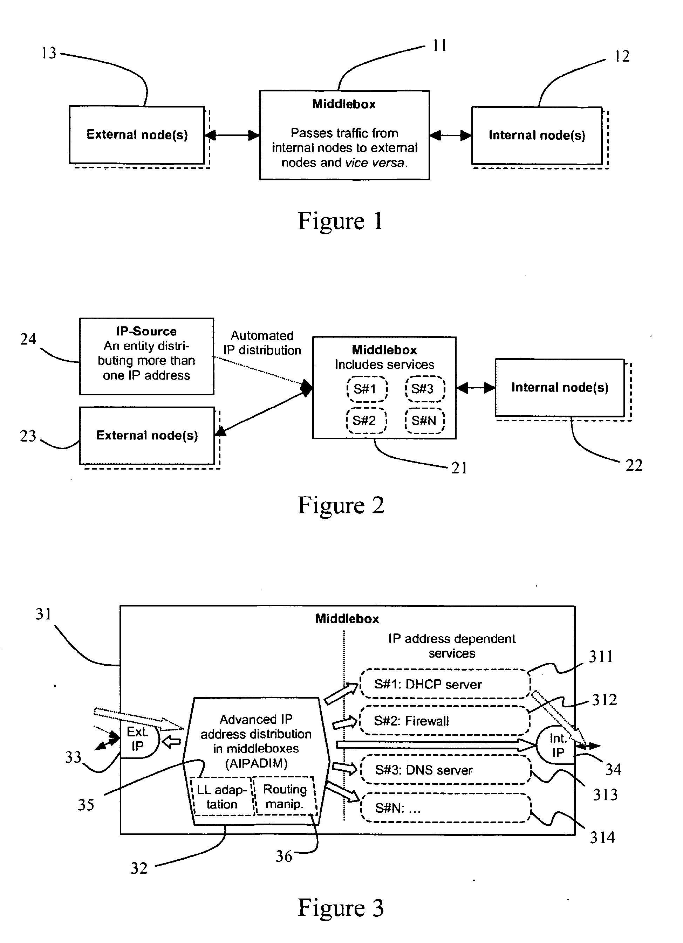

A middlebox is a device which passes IP traffic from one entity and passes it to another. A general representation of the function of a middlebox is provided in Figure 1. There are three entities shown in Figure 1: a middlebox 11, internal node 12 and external node 13. The internal node 12 is a node that is closer to the edge of the network than the middlebox, and the external node 13 refers to a node that is outside the influence of the middlebox. Typically there will be more than one internal and external node.

Middleboxes generally operate in one of three different modes. The first mode is known as a "bridge" mode. In this mode the middlebox has no IP address or IP addresses of its own, and simply passes IP traffic from one interface to another on a link-layer.

The second mode is a "NAT" (Network Address Translation) mode, as described in [RFC2663]. In this mode the middlebox translates between the private addresses of internal nodes to the public addresses of external nodes, and *vice versa.* In NAT mode the middlebox has at least two IP addresses: a public IP on an external interface, and a private IP on an internal interface.

The third mode is a "router" mode. In this mode the middlebox typically has at least two public IP addresses, and routes traffic on the network layer. One example of a middlebox acting as a router is described in US 2005/0044265.

Middleboxes can be used, for example, to provide an interconnection between a home or office network and an Internet Service Provider (ISP). Typically, such a middlebox translates between the protocols used in the home and those used over the connection to the ISP. A suitable arrangement is illustrated in Figure 2. The middlebox may, for example, be an Asynchronous Digital Subscriber Line (ADSL) modem.

It is desirable to be able to connect multiple computers to the ISP. One way of achieving this is to operate the middlebox in "NAT" mode. This enables translation between one or more public addresses allocated to the home user, and multiple local IP addresses. When operated in "NAT" mode the middlebox is also capable of providing IP address dependent services S#1, S#2, S#3, S#N, such as a Dynamic Host Configuration Protocol (DHCP) server [RFC2131], firewall and a Domain Name Service (DNS) server. However, this approach suffers from the problem that every computer in the home network, and indeed every Internet application (*e.g*. browser, Skype, *etc*.) requires its own NAT traversal code.

One solution to this problem is to provide each computer within the home network with its own IP address. The middlebox is then not required to translate between different addresses and may operate in "bridge" mode. The problem with this approach is that the computers in the network are vulnerable to an outside attack, and each must be provided with its own firewall. It is not possible to implement a firewall within the middlebox, since the middlebox, when acting as a bridge, does not have access to IP addresses, which arc needed by a firewall to filter traffic. In addition, traffic between nodes within the home network are sent through the middlebox to the ISP before being routed back to home. This is extremely inefficient.

### Summary of the Invention

In accordance with one aspect of the present invention there is provided a method of operating a middlebox as a router providing an interface between first and second IP networks where an entity within said first network is responsible for allocating IP addresses to an entity or entities within said second network. The method comprises implementing an address distribution functionality for performing routing of IP traffic within and between said networks based on IP addresses and implementing at least one IP address dependent service other than routing. The at least one IP address dependent service includes a DNS server and DHCP server. The method also comprises maintaining a table in the address distribution functionality which maps public IP addresses of the entity or entities within the second network to link layer addresses of the entities within the second network, and dynamically informing the DNS server and DHCP server of addresses allocated to said entity or entities within the second network and of changes to these addresses.

Thus the middlebox operates in "router" mode. A router has access to the IP addresses, enabling the operation of IP address dependent services such as a firewall, DHCP server or DNS server. In some embodiments the middlebox may be an ADSL modem, Home IMS Gateway or Access Point for a WLAN.

Preferably the entity within the first network responsible for allocating IP addresses is an IP source of an ISP. The middlebox may obtain at least two IP addresses from the IP source, and assign them to external and internal interfaces of the middlebox. This step is preferably performed using an automated IP address distribution mechanism such as DHCP. The middlebox is preferably also responsible for obtaining IP addresses, on behalf of the entity or entities within the second network, from the IP source. These IP addresses are preferably obtained when said entity or entities boots up.

In one embodiment the link layer address of an external interface of the middlebox is modified in response to the addresses allocated to the entities in the second network.

A further entity within the first network may also perform routing of IP traffic within and between said networks based on IP addresses, and may dynamically inform the or each IP address dependent service of addresses allocated to said entity or entities and of changes to these addresses. This further entity may obtain IP addresses on behalf of the middlebox.

The invention also provides a middlebox adapted to carry out the methods described above.

### Brief Description of the Drawings

Figure 1 is a schematic representation of a middlebox for passing traffic between two or more nodes.
Figure 2 is a schematic representation of a middlebox providing an interconnection between a home network and an Internet Service Provider (ISP) so as to provide the home network with more than one public IP address.
Figure 3 illustrates a middlebox implementing Advanced IP Address Distribution in Middleboxes (AIPADIM).
Figure 4 illustrates an exemplary signalling flow for obtaining a public IP address for a home or office network.
Figure 5 illustrates the implementation of AIPADIM on a Home IP Multimedia Subsystem (IMS) Gateway (HIGA).
Figure 6 illustrates the implementation of AIPADIM by a ADSL modem and a Wireless Local Area Network (WLAN) Access Point (AP).

### Detailed Description of the Preferred Embodiment

As previously discussed, Figure 2 illustrates the use of a middlebox 21 as an interconnection between internal nodes 22 of a home or office network and an ISP 24 which allocates public IP addresses to computers of the home network. In one example, the middlebox is an ADSL modem, and acts as a gateway for the home or office network. Once the public IP addresses have been allocated the internal nodes 22 can communicate with external nodes 23.

Figure 3 illustrates the internal features of a middlebox 31, which could act as the middlebox 21 of Figure 2. The middlebox 31 is configured to operate in "router" mode, so as to route traffic on the network layer. The middlebox 31 includes an Advanced IP Address Distribution in Middleboxes (AIPADIM) functionality 32. The AIPADIM operates as follows:
1. The AIPADIM component typically fetches two IP addresses from the IP source 24 of the ISP, and assigns them to the external 33 and internal 34 interfaces of the middlebox 31. This process is performed using an automated IP distribution mechanism such as DHCP.
2. The AIPADIM fetches IP addresses from the ISP on behalf of the internal nodes 22. This may be achieved, for example, by the middlebox fetching an IP address or addresses from the IP-source 24 whenever an internal node 22 boots up.

In some environments, especially on multi-access links, "link-layer adaptation" 35 may be needed. Link-layer adaptation is a part of AIPADIM, and can act, for example, to do the following:
- Modify the link-layer address of the middlebox's external interface. This is required because some automated IP address distribution mechanisms may check the link layer address of the sender. In such cases, the middlebox might have to 'forge' its link-layer address on some IP address queries
- Run the middlebox's external interface in a promiscuous mode. This ensures that the interface reads all the traffic it receives, rather than just the traffic that is destined to its link-layer address. Thus, if IP address queries with 'forged' link-layer addresses are sent by the middlebox, it will only receive replies if it is run in promiscuous mode.
- Maintain a table which maps the public IP addresses to link-layer addresses of internal nodes. This might include manipulation of the Address Resolution Protocol (ARP) table.

The middlebox 31 also provides IP address dependent services which may include, for example, a DHCP server 311, firewall 312, and DNS server 313. The AIPADIM function 32 keeps the IP address dependent services 311-314 informed of any changes in the IP address distribution.

Even though the routing itself is not seen as a service, a reactive "routing manipulation" service 36 is also provided. The routing manipulation functionality modifies the routing table of the middlebox so that the middlebox can make a decision on what interface an incoming packet should be forwarded to. The reactive nature of routing manipulation is particularly important in an environment where the ISP distributes dynamic IP addresses.

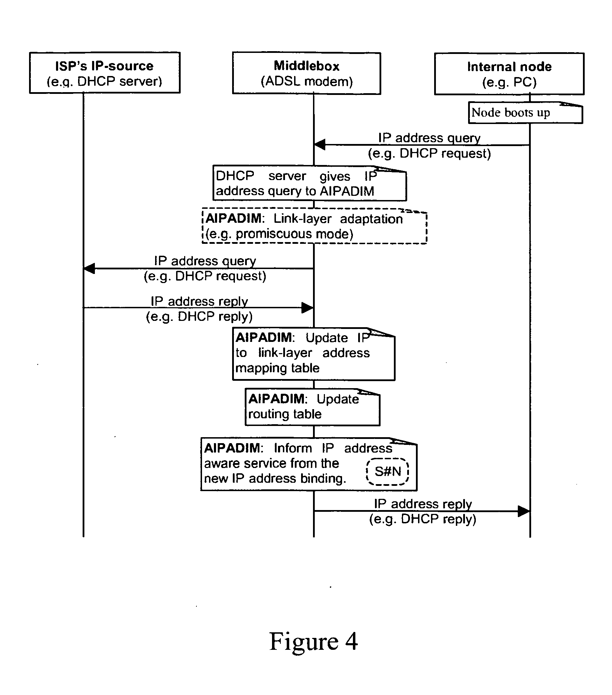

Figure 4 illustrates a suitable coarse signalling flow which could be used to put the example above (where the middlebox is an ADSL modem) into practice. The figure clarifies the behaviour of AIPADIM in a scenario where the internal node 22 boots up. All the actions performed by the AIPADIM functionality are identified by the "AIPADIM" tag. Similar behaviour also applies to other AIPADIM embodiments.

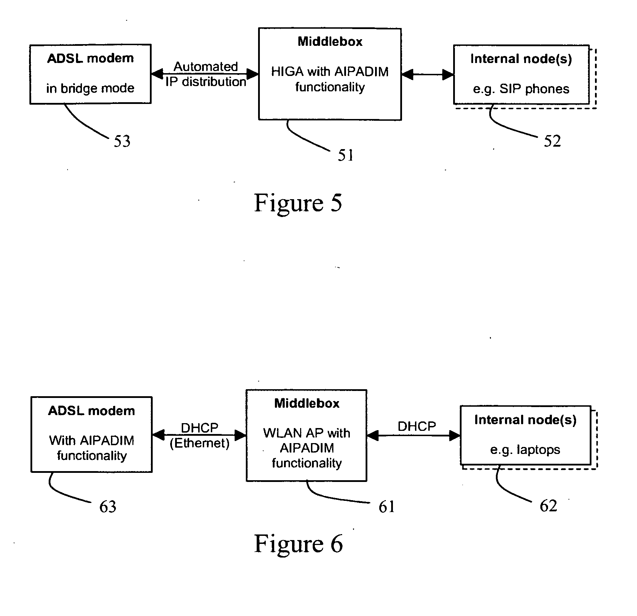

In another example, the AIPADIM functionality may be used in a Home IP Multimedia Subsystem (IMS) Gateway (HIGA). IP Multimedia (IPMM) is a service that provides a dynamic combination of voice, video, messaging, data, *etc*., within the same session. The application of AIPADIM to HIGA is illustrated in Figure 5.

In this example, a middlebox 51, which is a HIGA, obtains IP addresses from an ISP (not shown) via an ADSL connection 53. The middlebox 51 distributes acquired IP addresses to internal nodes 52, which can be for example Session Initiation Protocol (SIP) [RFC3261] phones. The middlebox may also operate internal IP address dependent services, such as for example a SIP proxy. The AIPADIM functionality is used to keep such services informed of the IP address distribution.

In a further example the Access Point (AP) of a Wireless Local Area Network (WLAN), together with an ADSL modem, is provided with AIPADIM functionality. This example is illustrated in Figure 6.

Figure 6 shows a middlebox 61 which is also the AP of a WLAN. The WLAN is represented schematically by a single internal node 62 (*e.g*. a laptop) but it will be appreciated that many internal nodes are likely to be present. The middlebox is also connected to an ADSL modem 63. The middlebox 61 and ADSL modem 63 may both implement AIPADIM. Both entities may have a DHCP server which is assisted by an AIPADIM component. The ADSL modem obtains IP addresses from an ISP (not shown) by using DHCP, and distributes them to the middlebox. The middlebox then distributes the IP addresses to internal nodes.

In this example, the link between the ADSL modem and the middlebox uses Ethernet, which is a multi-access network. It is therefore likely that link-layer adaptation (as described with reference to Figure 3) will be required. Firewalls (or other IP address dependent services) could be implemented in the ADSL modem 63, or the middlebox 61, or both.

It will be appreciated that the AIPADIM functionality is useful for situations not covered by the three examples described above. Figure 2 illustrates a home or office network scenario, but is also useful in considering a more general setting. Referring to Figure 2, in general the following entities will be present:
- IP source 24: An entity for distributing more than one IP address towards the middlebox, implementing AIPADIM. IP address distribution is done using an automated IP distribution mechanism.
- Middlebox 21: An entity which routes IP packets, includes AIPADIM functionality, and hosts one or more IP address aware services. The middlebox 21 obtains IP addresses using the automated IP address distribution.
- Internal node or nodes 22: Nodes that use the middlebox 21 to reach external nodes 23.
- External node or nodes 23: Nodes that use the middlebox 21 to reach internal nodes 22.

The middlebox 21 acts as a router that also provides IP address aware services. In this context, an IP address aware service signifies any service that could benefit from the knowledge of the IP address distribution. The routing itself is not seen as a service in this context.

The AIPADIM concept is especially useful in situations where public IP addresses are dynamic, *i.e.* situations where the IP source distributes different IP addresses over time.

It will be appreciated that a "nested" case, where the IP-source is also an entity implementing AIPADIM, is within the realm of this invention. Furthermore, the invention can be used with both IPv4 (IP version 4) [RFC791] and IPv6 (IP version 6) [RFC2460]. A middlebox implementing AIPADIM has one or more public IP addresses on its own interface or interfaces.

AIPADIM, as described herein, enables the use of middleboxes in a router mode. It also makes it possible to include IP address dependent services in the middlebox itself. Integrated reactive routing manipulation and link-layer adaptation functionalities are enablers for AIPADIM itself.

AIPADIM almost completely nullifies the need to run middleboxes either in bridged or in NAT mode. By doing so, it also provides an alternative solution which does not have the same problems that are associated with bridged and NAT mode. Furthermore, the AIPADIM concept is especially well suited to environments where public IP addresses are dynamic.

## Claims

1. A method of operating a middlebox (31) as a router providing an interface between first and second IP networks where an entity (24) within said first network is responsible for allocating IP addresses to an entity or entities (22) within said second network, the method comprising:
implementing an address distribution functionality (32) for performing routing of IP traffic within and between said networks based on IP addresses; and
implementing at least one IP address dependent service (311, 312, 313) other than routing;
**characterised in that** the at least one IP address dependent service includes a DNS server and a DHCP server;
and **in that** the method further comprises;
maintaining a table in the address distribution functionality which maps public IP addresses of the entity or entities within the second network to link layer addresses of the entities within the second network;
dynamically informing the DNS server and DHCP server of addresses allocated to said entity or entities within the second network and of changes to these addresses.

2. The method of claim 1, wherein the entity (24) within the first network responsible for allocating IP addresses is an IP address source of an ISP.

3. The method of claim 1 or 2, further comprising obtaining one or more IP addresses from the entity (24) within the first network responsible for allocating IP addresses, and assigning them to external (33) and internal (34) interfaces of the middlebox (31).

4. The method of claim 3, wherein the same IP address is assigned to the external (33) and internal (34) interfaces of the middlebox (31).

5. The method of claim 3, wherein two or more IP addresses are obtained from the entity (24) within the first network responsible for allocating IP addresses and assigned to the external (33) and internal (34) interfaces of the middlebox (31).

6. The method of claim 3, 4 or 5 wherein the step of obtaining the one or more IP addresses is performed using an automated IP address distribution mechanism (32).

7. The method of claim 6, wherein the automated IP address distribution mechanism is DHCP.

8. The method of any preceding claim, further comprising operating the middlebox (31) to obtain one or more IP addresses on behalf of the entity or entities (22) within the second network from the entity (24) within the first network responsible for allocating IP addresses.

9. The method of claim 8, wherein the IP address or addresses for the entity or entities (22) within the second network are obtained when said entity or entities boots up.

10. The method of any preceding claim, wherein the link layer address of an external interface (33) of the middlebox (31) is modified in response to the addresses allocated to the entities in the first and second networks.

11. The method of any preceding claim, further comprising operating internal IP address dependent services for entities within the second network.

12. The method of any preceding claim, wherein the middlebox comprises an ADSL modem, a Home IMS Gateway (51), or a WLAN Access Point (61).

13. The method of any preceding claim, wherein a further entity within the first network also performs routing of IP traffic within and between said networks based on IP addresses and dynamically informs the or each IP address dependent service (311, 312, 313) of addresses allocated to said entity or entities and of changes to these addresses.

14. The method of claim 13, wherein the further entity within the first network obtains IP addresses on behalf of the middlebox (31).

15. A middlebox (31) adapted to carry out the method of any preceding claim.

## Patentansprüche

1. Verfahren zum Betreiben einer Middlebox (31) als einen Router, der eine Schnittstelle zwischen einem ersten und einem zweiten IP-Netz bereitstellt, wo eine Entität (24) innerhalb des ersten Netzes für das Zuordnen von IP-Adressen an eine Entität oder Entitäten (22) innerhalb des zweiten Netzes verantwortlich ist, wobei das Verfahren umfasst:
Implementieren einer Adressverteilungsfunktionalität (32) zum Ausführen des Routings von IP-Verkehr innerhalb und zwischen den Netzen auf der Basis von IP-Adressen; und
Implementieren von mindestens einem von einer IP-Adresse abhängigen Dienst (311, 312, 313), der vom Routing verschieden ist;
**dadurch gekennzeichnet, dass** der mindestens eine von einer IP-Adresse abhängige Dienst einen DNS(Domänennamendienst)-Server und einen DHCP(dynamisches Hostkonfigurationsprotokoll)-Server einschließt;
und dadurch, dass das Verfahren außerdem umfasst:
Unterhalten einer Tabelle in der Adressverteilungsfunktionalität, die öffentliche IP-Adressen der Entität oder Entitäten innerhalb des zweiten Netzes auf Verbindungsschichtadressen der Entitäten innerhalb des zweiten Netzes abbildet;
dynamisches Informieren des DNS-Servers und des DHCP-Servers über Adressen, die der Entität oder den Entitäten innerhalb des zweiten Netzes zugeordnet sind, und über Änderungen an diesen Adressen.

2. Verfahren nach Anspruch 1, worin die Entität (24) innerhalb des ersten Netzes, die für das Zuordnen von IP-Adressen verantwortlich ist, eine IP-Adressquelle eines ISP(Internet-Dienstanbieter) ist.

3. Verfahren nach Anspruch 1 oder 2, außerdem umfassend, dass eine oder mehrere IP-Adressen von der Entität (24) innerhalb des ersten Netzes beschafft werden, die für das Zuordnen von IP-Adressen verantwortlich ist, und diese einer externen (33) und einer internen (34) Schnittstelle der Middlebox (31) zugewiesen werden.

4. Verfahren nach Anspruch 3, worin dieselbe IP-Adresse der externen (33) und der internen (34) Schnittstelle der Middlebox (31) zugewiesen wird.

5. Verfahren nach Anspruch 3, worin zwei oder mehr IP-Adressen von der Entität (24) innerhalb des ersten Netzes beschafft werden, die für das Zuordnen von IP-Adressen verantwortlich ist, und der externen (33) und der internen (34) Schnittstelle der Middlebox (31) zugewiesen werden.

6. Verfahren nach Anspruch 3, 4 oder 5, worin der Schritt des Beschaffens von einer oder mehreren IP-Adressen unter Verwendung eines automatischen IP-Adressen-Verteilungsmechanismus (32) ausgeführt wird.

7. Verfahren nach Anspruch 6, worin der automatische IP-Adressen-Verteilungsmechanismus das DHCP ist.

8. Verfahren nach einem der vorhergehenden Ansprüche, außerdem das Betreiben der Middlebox (31) umfassend, um eine oder mehrere IP-Adressen für die Entität oder die Entitäten (22) innerhalb des zweiten Netzes von der Entität (24) innerhalb des ersten Netzes zu beschaffen, die für das Zuordnen von IP-Adressen verantwortlich ist.

9. Verfahren nach Anspruch 8, worin die IP-Adresse oder -Adressen für die Entität oder Entitäten (22) innerhalb des zweiten Netzes beschafft werden, wenn die Entität oder Entitäten urladen.

10. Verfahren nach einem der vorhergehenden Ansprüche, worin die Verbindungsschichtadresse einer externen Schnittstelle (33) der Middlebox (31) als Antwort auf die Adressen modifiziert wird, die den Entitäten in dem ersten und dem zweiten Netz zugeordnet werden.

11. Verfahren nach einem der vorhergehenden Ansprüche, außerdem das Betreiben von internen Diensten, die von einer IP-Adresse abhängen, für Entitäten des zweiten Netzes umfassend.

12. Verfahren nach einem der vorhergehenden Ansprüche, worin die Middlebox Folgendes umfasst: ein ADSL(asynchrone digitale Teilnehmerleitung)-Modem, ein Heimat-IMS(IP-Multimedia-Subsystem)-Gateway (51) oder einen WLAN-Zugangspunkt (61).

13. Verfahren nach einem der vorhergehenden Ansprüche, worin eine weitere Entität innerhalb des ersten Netzes auch das Routing von IP-Verkehr innerhalb der Netze und zwischen den Netzen auf der Basis von IP-Adressen ausführt und den oder jeden von einer IP-Adresse abhängigen Dienst (311, 312, 313) über der Entität oder den Entitäten zugeordnete Adressen und über Änderungen an diesen Adressen dynamisch informiert.

14. Verfahren nach Anspruch 13, worin die weitere Entität innerhalb des ersten Netzes IP-Adressen für die Middlebox (31) beschafft.

15. Middlebox (31), angepasst zum Ausführen des Verfahrens nach einem der vorhergehenden Ansprüche.

## Revendications

1. Procédé d'exploitation d'un boîtier intermédiaire (31) en tant que routeur fournissant une interface entre des premier et deuxième réseaux IP, dans lequel une entité (24) dans ledit premier réseau est chargée d'attribuer des adresses IP à une entité ou à des entités (22) dans ledit deuxième réseau, le procédé comprenant :
la mise en oeuvre d'une fonctionnalité de distribution d'adresse (32) pour effectuer l'acheminement de trafic IP dans et entre lesdits réseaux sur la base d'adresses IP ; et
la mise en oeuvre d'au moins un service dépendant d'une adresse IP (311, 312, 313) autre que l'acheminement ;
**caractérisé en ce que** ledit au moins un service dépendant d'une adresse IP comprend un serveur DNS et un serveur DHCP ;
et **en ce que** le procédé comprend en outre ;
le maintien d'une table dans la fonctionnalité de distribution d'adresse qui mappe les adresses IP publiques de l'entité ou des entités dans le deuxième réseau vers des adresses de couche de liaison des entités dans le deuxième réseau ;
la notification dynamique au serveur DNS et au serveur DHCP des adresses attribuées à ladite entité ou aux dites entités dans le deuxième réseau et des changements apportés à ces adresses.

2. Procédé selon la revendication 1, dans lequel l'entité (24) dans le premier réseau chargée de l'attribution des adresses IP est une source d'adresse IP d'un ISP.

3. Procédé selon la revendication 1 ou 2, comprenant en outre l'obtention d'une ou de plusieurs adresses IP de l'entité (24) dans le premier réseau chargée de l'attribution des adresses IP, et leur attribution à des interfaces externe (33) et interne (34) du boîtier intermédiaire (31).

4. Procédé selon la revendication 3, dans lequel la même adresse IP est attribuée aux interfaces externe (33) et interne (34) du boîtier intermédiaire (31).

5. Procédé selon la revendication 3, dans lequel deux adresses IP ou plus sont obtenues de l'entité (24) dans le premier réseau chargée de l'attribution des adresses IP et attribuées aux interfaces externe (33) et interne (34) du boîtier intermédiaire (31).

6. Procédé selon la revendication 3, 4 ou 5, dans lequel l'étape d'obtention desdites une ou plusieurs adresses IP est effectuée en utilisant un mécanisme de distribution d'adresse IP automatisé (32).

7. Procédé selon la revendication 6, dans lequel le mécanisme de distribution d'adresse IP automatisé est le DHCP.

8. Procédé selon l'une quelconque des revendications précédentes, comprenant en outre l'exploitation du boîtier intermédiaire (31) pour obtenir une ou plusieurs adresses IP au nom de l'entité ou des entités (22) dans le deuxième réseau de l'entité (24) dans le premier réseau chargée de l'attribution des adresses IP.

9. Procédé selon la revendication 8, dans lequel l'adresse ou les adresses IP pour l'entité ou les entités (22) dans le deuxième réseau sont obtenues lors de l'amorçage de ladite entité ou desdites entités.

10. Procédé selon l'une quelconque des revendications précédentes, dans lequel l'adresse de couche de liaison d'une interface externe (33) du boîtier intermédiaire (31) est modifiée en réponse aux adresses attribuées aux entités dans les premier et deuxième réseaux.

11. Procédé selon l'une quelconque des revendications précédentes, comprenant en outre l'exploitation de services dépendants d'adresses IP internes pour des entités dans le deuxième réseau.

12. Procédé selon l'une quelconque des revendications précédentes, dans lequel le boîtier intermédiaire comprend un modem ADSL, une passerelle IMS nominale (51), ou un point d'accès de WLAN (61).

13. Procédé selon l'une quelconque des revendications précédentes, dans lequel une entité supplémentaire dans le premier réseau effectue également l'acheminement de trafic IP dans et entre lesdits réseaux sur la base des adresses IP et informe dynamiquement le ou chaque service dépendant d'une adresse IP (311, 312, 313) des adresses attribuées à ladite entité ou aux dites entités et des changements de ces adresses.

14. Procédé selon la revendication 13, dans lequel l'entité supplémentaire dans le premier réseau obtient des adresses IP au nom du boîtier intermédiaire (31).

15. Boîtier intermédiaire (31) conçu pour effectuer le procédé selon l'une quelconque des revendications précédentes.
